(19) Europäisches Patentamt
European Patent Office
Office européen des brevets

(11) Veröffentlichungsnummer: **0 268 873**
**A2**

(12) # EUROPÄISCHE PATENTANMELDUNG

(21) Anmeldenummer: **87116063.6**

(22) Anmeldetag: **31.10.87**

(51) Int. Cl.4: **C11D 1/835**, C11D 1/62, C11D 1/06, C11D 3/33

(30) Priorität: **21.11.86 DE 3639885**

(43) Veröffentlichungstag der Anmeldung: **01.06.88 Patentblatt 88/22**

(84) Benannte Vertragsstaaten: **AT BE CH DE ES FR GB GR IT LI LU NL SE**

(71) Anmelder: **Joh. A. Benckiser GmbH**
**Postfach 210 167**
**D-6700 Ludwigshafen(DE)**

(72) Erfinder: **Schmid, Erich, Dr. Dipl.-Chem.**
**Fürstenweg 19**
**D-6730 Neustadt-Gimmeldingen(DE)**
Erfinder: **Haller, Emil**
**Hoher Weg 31**
**D-6701 Rödersheim-Gronau(DE)**

(74) Vertreter: **Grussdorf, Jürgen, Dr. et al**
**Patentanwälte Zellentin & Partner**
**Rubensstrasse 30**
**D-6700 Ludwigshafen(DE)**

(54) **Reiniger mit desinfizierender Wirkung.**

(57) Die Erfindung betrifft einen Reiniger, der 0,5 - 10% einer quartären Ammoniumverbindung, 1 - 10% einer Alkylethercarbonsäure, 10 - 40% einer komplexbildenden Aminopolycarbonsäure, 0 - 5% Alkalihydroxid (pH 9 - 12) und 78 - 35% Wasser enthält, sowie seine Verwendung zum Reinigen von Apparaten in der Lebensmittelindustrie.

EP 0 268 873 A2

## Reiniger mit desinfizierender Wirkung

Gegenstand der vorliegenden Erfindung ist ein neuer Reiniger, insbesondere für Apparaturen in der Lebensmittelindustrie.

In der Lebensmittelindustrie besteht ein erheblicher Bedarf an Reinigungsmitteln, mit denen die verschiedenen Apparaturen und insbesondere Leitungen immer wieder gereinigt werden können, um einen Befall bzw. eine Vermehrung der auftretenden Mikroorganismen zu verhindern.

Die Reiniger sollen dabei nicht nur eine möglichst vollständige Ablösung aller Verunreinigungen bewirken, die sonst als Nährboden der Mikroorganismen wirken könnten, sondern auch die unvermeidbar zurückbleibenden Mikroorganismen abtöten.

Reste der Reiniger, können in der Apparatur zurückbleiben und sich ggf. mit den zu bearbeitenden Lebensmitteln vermengen. Sie müssen daher beim Genuß absolut verträglich für die menschliche Gesundheit sein und sollten auch bei Kontakt mit der Haut in konzentriertem Zustand keine schädlichen Wirkungen haben.

Die Reinigungslösungen dürfen nicht schäumen, da sonst die mechanische Wirkung der wässrigen Lösung beim Umpumpen geschwächt wird und die Anlagen abschalten. Notwendig ist ferner, daß die Reiniger bei den häufig angewendeten, alkalischen Bedingungen stabil und wirksam bleiben und vor allem keine unlöslichen Salze bilden, die an Gefäßwänden haften.

Bekannte Reiniger erfüllen diese Forderungen jeweils nur teilweise. So enthalten die alkalischen Reiniger häufig Chlor als Desinfektionsmittel, welches sowohl die Haut reizt, als auch -zumindest in größerer Menge-gesundheitsschädlich ist.

Chlorhaltige Produkte bilden mit organischen Stoffen organische Chlorverbindungen, die im Abwasser unerwünscht sind.

Andere Reiniger mit dem Desinfektionswirkstoff quartäre Ammoniumverbindungen enthalten Tensidkombinationen, welche in alkalischen Medien schäumen und/oder schwerlösliche Salze bilden, so daß die erhaltenen Lösungen trüb werden, einen Teil der Reinigungswirkung einbüßen und an den Gefäßwänden zu Ausfällen führen.

Es bestand daher ein Bedürfnis nach neuartigen Reinigern, insbesondere für die Lebensmittelindustrie, die diesen Forderungen gerecht werden. Überraschenderweise wird dies durch die in den Ansprüchen näher gekennzeichneten Reiniger erfüllt.

Als quartäre Ammoniumverbindung werden Verbindungen der allgemeinen Formel I verwendet

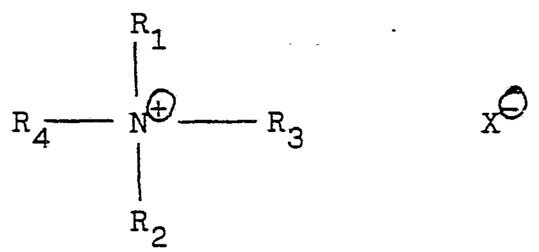

(I)

in der $R_1$ und $R_2$ gleich oder verschieden sind und eine niedere Alkylgruppe mit 1 - 4 C-Atomen, insbesondere eine Methylgruppe darstellen,
$R_3$ die gleiche Bedeutung hat wie $R_1$ oder eine Phenyl-alkylgruppe mit 1-4 C-Atomen im Alkylrest,
$R_4$ eine langkettige Alkylgruppe mit 10 - 15 C-Atomen und
X das Anion einer Mineralsäure darstellt.

Diese Verbindungen gehören zu der Gruppe kationischer Tenside.

Die vorstehenden Verbindungen der Formeln I wirken bakterizid und erlauben es, auf einen Zusatz von Chlor, wie er bisher für notwendig gehalten wurde, um eine ausreichende Sterilisierung der zu reinigenden Apparate zu erreichen, zu verzichten.

Unter Alkylpolyglycolethercarbonsäuren wird eine Verbindung der allgemeinen Formel II verstanden

$R - (OC_2{\bullet}H_4)_n - O - CH_2 - CO_2H$ ( II )

in der R eine Alkylgruppe mit 5 - 15 C-Atomen und n eine ganze Zahl von 2 - 10 bedeuten.

Diese Verbindungen gehören zu der Gruppe der anionischen Tenside.

Als komplexbildende Aminopolycarbonsäuren werden Verbindungen, wie Ethylendiamintetraessigsäure (EDTA), Nitrilotriessigsäure (NTA), Diethylentriaminpentaessigsäure (DETAPA) verwendet.

Zur Einstellung des für die Reinigung optimalen pH-Werts, der bei solchen Reinigern üblicherweise zwischen 9 und 12 liegen sollte, wird ein Alkalihydroxid, insbesondere Natrium-oder Kalium-hydroxid zugefügt, oder es werden von vornherein die entsprechenden Salze verwendet.

Als Lösungsvermittler, durch die die Kältestabilität der Produkte verbessert wird, können der Mischung noch 0 - 5 % einer niederen Fettsäure mit bis zu 10 C-Atomen oder 0 - 10 % eines niederen Alkohols, wie Ethanol, Propanol oder Butanol oder ein Glykolether zugefügt werden.

Es ist überraschend, daß die erfindungsgemäße Kombination die gewünschten vorteilhaften Wirkungen aufweist.

Üblicherweise bilden kationische und anionische höhermolekulare Verbindungen zusammen in wässriger Lösung schwerlösliche Salze. Diese sogenannten Elektroneutralverbindungen verbleiben zum Teil im zu reinigenden System, insbesondere wenn in den Rezepturen Entschäumer eingesetzt werden. Bei der Kombination der erfindungsgemäßen Ammoniumverbindungen und Alkylethercarbonsäure mit Aminopolycarbonsäure gemäß Anspruch 1 tritt dies nicht auf.

Kationische Tenside sind sehr starke Schäumer. In der erfindungsgemäßen Kombination wird das Schäumen überraschenderweise auch ohne Zugabe eines Entschäumers fast völlig unterdrückt, so daß die Mischung auch für eine "cleaning in place" - Reinigung verwendet werden kann.

Desinfektionswirkung und Reinigungswirkung der Komponenten bleiben in der Mischung vollständig erhalten und es ergeben sich klare Lösungen. Auch ein Ausfall von Elektroneutralsalzen wird überraschenderweise nicht beobachtet.

Soweit als Komplexbildner Phosphate, Sufonate, Phosphonate oder andere verwendet werden, wird nach kurzer Zeit ein Ausfall von schwer löslichen Elektroneutralverbindungen beobachtet.

Die erfindungsgemäßen Reiniger können ferner noch 0 - 5 %, vorzugsweise 1 - 2 % lösliches Silikat, z.B. ein Alkalimetasilikat, enthalten. Diese Zusätze haben sich als Korrosionsschutz, insbesondere bei Aluminiumoberflächen der zu reinigenden Apparate bewährt.

In den folgenden Beispielen ist die Erfindung näher erläutert, ohne daß sie dadurch beschränkt werden soll.

Soweit nicht anders vermerkt, beziehen sich alle Angaben auf Gewichtsprozente.

Beispiel 1

| | | |
|---|---|---|
| 0,5 | % | Cetyltrimethylammoniumchlorid |
| 3 | % | Hexyl-octa polyethylenglykol-essigsäure (Akypo MB 1585, WZ d. Chem-Y) |
| 20 | % | Nitrilotriacetat (z.B. Trilon A 92, BASF) |
| 4 | % | Natriumhydroxid (pH 10,2) |

Rest auf 100 Wasser

Die vorstehenden Bestandteile werden in einem Rührkessel zusammengegeben und bei Raumtemperatur gründlich gemischt. Es ergibt sich eine klare Lösung, die bei + 40 °C, 20 °C und + 1 °C gelagert werden kann, ohne sich zu verändern.

1 : 200 mit Wasser verdünnt, erhält man eine praktisch nicht schäumende Reinigungsflüssigkeit mit guter desinfizierender Wirkung.

Das Produkt wird mit einem handelsüblichen Reiniger folgender Zusammensetzung verglichen:

24 % Natronwasserglas
10 % Natriumtripolyphosphat
30 % Natronbleichlauge
10 % Kaliumhydroxid

26 % Wasser.

Versuchsanordnung:

In einem Feldversuch mit 18 Landwirten wird mehrfach die Reinigungswirkung an den Melkeinrichtungen der Landwirte getestet und der subjektive Eindruck bewertet. In der folgenden Tabelle sind die Ergebnisse zusammengestellt, wonach das erfindungsgemäße Produkt allen Belangen gleich gut oder besser ist, als das Vergleichsprodukt:

Tabelle

| Prüfung | besser als Vergleichspr. | so gut wie Vergleichspr. | schlechter als Vergleichspr. |
|---|---|---|---|
| Schaumverhalten | 3 | 15 | - |
| Reinigungswirkung | 5 | 13 | - |
| Rückstandsbildung | - | 18 | - |
| Geruch d.Lösung/Hände | 18 | - | - |

Beispiel 2

| | | |
|---|---|---|
| 1 | % | Benzyl-dodecyl-dimethyl-ammoniumchlorid (Lutensid KLC, WZ der BASF) |
| 2 | % | Hexyl-octa polyethylenglykol-essigsäure |
| 15 | % | Ethylendiamin-tetraessigsäure - Natriumsalz |
| 2 | % | Natriumhydroxid |
| Rest | | Wasser |

Die Bestandteile werden analog Beispiel 1 gemischt und ergeben eine Lösung mit entsprechenden Eigenschaften.

Beispiel 3

| | kg |
|---|---|
| Wasser vollentsalzt | 42.1 |
| Natronwasserglas (Dichte 1,34 - 1,38 | 0.5 |
| Nitrilotriacetat flüssig (40 %ige Lösung) | 46.0 |
| Triethanolamin | 5.0 |
| Benzyl-dodecyl-dimethyl-ammoniumchlorid | 0.5 |
| polyethoxyliertes Oleylamin | 0.2 |
| Hexyl-octapolyethylenglykol-essigsäure | 1.5 |
| Isobutylformiat/Isobutanolgemisch | 4.0 |

Die Bestandteile werden unter kräftigem Rühren in das vorgelegte Wasser eingetragen. Es ergibt sich eine schwach gelblich gefärbte Lösung einer Dichte von 1,13; pH 10,6;
Wird 1 ml mit 200 ml Wasser verdünnt, enthält man eine desinfizierende Reinigungsflüssigkeit, welche in einer Schüttelmaschine bei 30°C nach 10 sec weniger als 20 ml Schaum aufweist.

**Ansprüche**

1.) Reiniger enthaltend
0,5 - 10 % einer quartären Ammoniumverbindung der allgemeinen Formel I

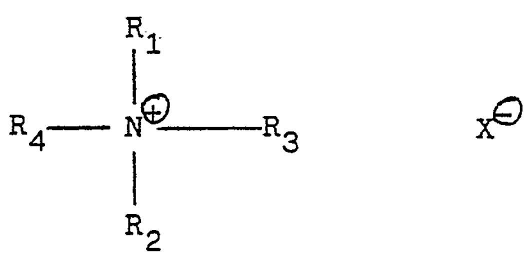

(I)

in der $R_1$ und $R_2$ gleich oder verschieden sind und eine niedere Alkylgruppe mit 1 - 4 C-Atomen, insbesondere eine Methylgruppe darstellen,
$R_3$ die gleiche Bedeutung hat wie $R_1$ oder eine Phenyl-alkylgruppe mit 1 - 4 C-Atomen im Alkylrest,
$R_4$ eine langkettige Alkylgruppe mit 10 - 15 C-Atomen und
X das Anion einer Mineralsäure darstellt.
1 - 10 % einer Alkylethercarbonsäure der allgemeinen Formel II
$R - (OC_2H_4)_n - O - CH_2 - CO_2H$ ( II )

in der R eine Alkylgruppe mit 5 - 15 C-Atomen und n eine ganze Zahl von 2 - 10 bedeuten.
10-40 % einer komplexbildenden Aminopolycarbonsäure
0 - 5 % Alkalihydroxid (pH 9 - 12)
Rest Wasser

2.) Reiniger gemäß Anspruch 1, dadurch gekennzeichnet, daß zusätzlich noch 0 - 5 % Fettsäure mit bis zu 10 C-Atomen oder bis zu 10 % Lösungsvermittler, wie z.B. Alkohole oder Glykolether enthalten sind.

3.) Reiniger gemäß Anspruch 1 oder 2, dadurch gekennzeichnet, daß zusätzlich 0 - 5 % vorzugsweise 1 - 2 % wasserlösliches Silikat enthalten sind.

4.) Verwendung von Reinigern gemäß Anspruch 1,2 oder 3, als 0,1 bis 1 %-ige Lösung in Wasser zum Reinigen von Apparaten in der Lebensmittelindustrie, insbesondere Molkereien.